# EUROPEAN PATENT APPLICATION

(11) **EP 3 575 200 A1**
(43) Date of publication of application: **04.12.2019**
(21) Application number: 18745353.5
(22) Date of filing: 24.01.2018
(51) Int. Cl.: B63H 9/08, B63B 15/02

(54) **STABILISED ROTARY SAIL RIGGING**

(30) Priority: 26.01.2017 ES 201700055
(71) Applicant: INVERSAIL S.A., 28224 Pozuelo de Alarcon-Madrid (ES)
(72) Inventor: FERNÁNDEZ PUENTES, Gonzalo, 28023 Madrid (ES)
(74) Representative: Urizar Anasgasti, José Antonio
(86) International application number: PCT/ES2018/070055
(87) International publication number: WO 2018/138399

(57) **Abstract**

A stabilized rotating sailing rigging for boats formed by a mast, a boom perpendicular to the said mast, and one or more sails bent to the said common boom and to the mast; rig capable of freely rotating with all its elements, around a vertical axis, with the important and novel characteristic that the top of the mast is stabilized by shrouds and/or stays which tie it to the periphery of the deck or decks of the boat without jeopardizing the rotation of the rig around its vertical axis. This top of the mast stabilization also permits the use of prow fixed sails.

## Description

### FIELD OF THE INVENTION

The present invention is a sailing rig for boats which combines the advantages of the self-supported rotating rigs of being able to rotate around themselves, even over 360°, with the advantages of simplicity and strength of the rigs stabilized by means of shrouds and stays, and also the advantage of being able to use fixed head sails.

### DESCRIPTION OF THE PRIOR ART

On the traditional sailing rigs, with a main sail at the back and one or more head sail at the front, the transversal stability of the rig is achieved by means of a network of shrouds and inner shrouds placed at both sides of the mast, basically perpendicular to the boats plane of symmetry. This precludes for the main sail's boom to go beyond this transversal network, and as a consequence:
* dangerous gybing can take place
* the boat must be put into the wind, for hoisting, reefing, or lowering the main sail; a dangerous procedure when running a gale
* it is not possible to let the main sail go like a wind vane with sudden gusts of wind
* and the horizontal forces on the main's sheet can be enormous

In order to avoid this transversal network of shrouds and inner shrouds, self-supported rigs have been tried for decades, by this name we refer to rigs solely supported by their own mast, thanks to a bearing fixed to the boats keel and to another fixed to its deck. With the absence of this network of shrouds and inner shrouds, the booms of these rigs can rotate freely. In order to compensate for the difference of forces in front and behind the mast, the boom continues in front of the said mast, and on to this "common boom", a small self-tacking jib is rigged.

With all this, not only the four above mentioned problems of the traditional rigs are eliminated:
* one is no longer forced to jibe, as the main sail can tack ahead of the mast.
* hoisting, reefing, and lowering can be done with following winds
* the rig can rotate freely, just like a wind vane
* and being the rig partially compensated, thanks to the self-tacking jib, the horizontal efforts on the main sail sheet are drastically reduced
but in addition, these self-supported rigs also permit:
* that in following winds, the main sail does not blank the jib
* and that the slot between jib and main remains constant in all wind directions, allowing for a beneficial injection of wind on the lee of the main sail

We believe that the first self-supported rig was developed by K.R.May in 1975 under the name of "Boomsprit", later Carbospars Ltd. developed commercially a similar rig: The Aerorig.

It looked like this rig was to become "the future rig", but this did not happen. Several boats were built employing the Aerorig solution, but eventually, the interest for this type of rig dwindled. The reasons behind this loss of interest were that lacking any type of stays or shrouds, they had to be entirely built in carbon and were too heavy and expensive, in bad weather they quivered like fishing rods, and they did not permit the use of the handy roller reefing head sails for light or following winds.

Other rotating self-supported rigs have been proposed, with different solutions to the one mentioned above. Like the L rig patented in 1984 by Rolf Hatiapa (EPO 0 184 782), it had only one sail, and the deck bearing was not on the mast but under the boom; and like the Japanese one of Hori Yukimasa, patented in 1987 as (JP 160359/87), where the rig is exclusively supported by a circular rail.

### SUMMARY OF THE INVENTION

Being the sailing community always thinking on narrow mono-hulls, masts transversally supported by shrouds with several cross-trees and their corresponding inner shrouds, enormous booms attached by their front to the mast, and controlled only by means of a sheet attached to its back; it was not easy to consider a solution which permitted that the said boom could rotate 360° and that the mast would have externally stayed.

Nevertheless, after so many years we have realized that indeed there is a solution which permits the "staying" of the top of the mast by means of permanent and external shrouds and stays, and which also permits the use of head sails.

The curious thing is that the solution to the problem was hidden precisely behind the "common boom" concept of the rotary self-supported rigs. In the traditional rigs, the boom is connected by its forward end forming an L with the mast, in the rotating rigs the boom is connected by its middle to the mast forming with it an inverted T, an inverted cross. Because of that, for the same mast height and the same sail area, the radio of the area swept by the boom would be half in the case of the rotating rigs. The other part of the solution is related to the multihulls appearance.

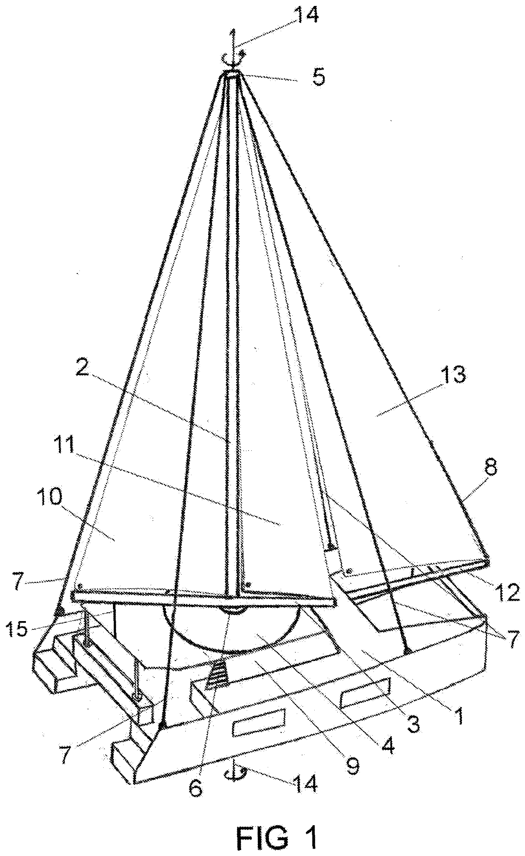

The solution consists precisely on replacing the transversal fixed rigging and of the "great" boom connected by its forward end to the mast of the traditional rigs, by shrouds and/or stays that tie the top of the rotating mast to the external part of the deck or decks, and by a "small" boom common to the main and to the jib (s), connected by its middle part to the mast, in such a way that the top of the mast is stabilized, the common boom rotates freely under the staying, and that fixed head sails can be used. (Figure 1).

The connection between the fixed parts of the boat and the rotating ones must necessarily be made by means of some type of bearing. This can be done with a bearing at the top of the mast, for the connection of shrouds and/or stays, plus another bearing at the base of mast on the deck, as shown in Figure 1.

As an alternative solution, a fixed mast could be used, interior and coaxial with the rotation axis, solidly connected to the deck of the boat and to the shrouds and/or stays at the top of the mast, while the proper rotating rig, (exterior mast, horizontal boom, and sails) rotate around it. This exterior rotating mast could be a tube-mast, a mast with several legs but a single top, or even a textile sleeve such as in a wind-surf. This solution has possible technical advantages, such as for example facilitate the use of position lights at the top of the mast.

The base of the mast and the lower bearing do not necessarily have to coincide. In this case, the mast and the axis of rotation would not coincide. The base bearing would have to be connected to other parts of the rig, such as the boom itself, the base platform or inferior ramifications of the mast

It is possible to have a single sail, for example through the backwards inclination of the mast and the backwards shifting of the rotation axis, or by employing a two-legged mast, as if it were an inverted V, which would let part of this single sail pass ahead of the mast.

The oblique placement of four shrouds, two to port and two to starboard, two forward and two backward, would be ideal for maximizing the size of the boom and for best supporting the mast. The minimal number of shrouds is two, one for each side of the boat, and in this case head and/or back stays would have to be used in order to support correctly the mast. Of course, there is no maximum number.

Once the top of the rotating mast has been externally stayed, it is not longer necessary for the rig to be self-supported, and thus the two bearings, at the keel and at the deck, of the self-supported rigs are no longer obligatory; the bearings at the top of the mast and at the deck suffice.

Because the mast of the rotating rigs is near the centre of the common boom, the distance from the said mast to the head sails is naturally greater than in the traditional rigs, thus the mast has to be placed further back, and because of this, the head sail stays must have a steeper inclination.

The size of the common boom is limited by the beam of the boat. Because of that, this patent is best suited to catamarans and trimarans. It is also valid for folding trimarans, although care should be taken to avoid the mast falling when the floats are folded. Mono-hulls, being narrower, are slightly less suited for this type of rig. Nevertheless, it is always possible to use several rotating rigs, and even temporary transversal poled out shrouds, like the ones used by extreme racing mono-hulls. Above all, we should also not forget that no matter the type of boat, we can always use totally or partially supported rigs so as to separate longitudinally more the attachments of the shrouds to the deck and thus have longer common booms.

### ADVANTAGES OF THE INVENTION

Besides the general advantages of the rotating rigs, our rig offers the following additional advantages:
* The top of the mast is stabilized, and the "whip effect" disappears, even if we keep almost the same sail area as in the traditional rigs.
* Expensive and heavy carbon self-supported masts are no longer needed.
* Permanent and rollable head sails can be used
* The rigs are simple and easy to use
* The mast is placed further back, thus being of better access

### BRIEF DESCRIPTION OF THE DRAWINGS

In order to better explain the invention, and to facilitate its understanding, and in accordance with a preferred example of its practical realization, we hereby enclose the following set of drawings, where with illustrative and no limitative character, the following is represented:
Figure 1 shows a perspective view of a generic cruising catamaran equipped with the rotating rig of our invention, with four shrouds and/or stays and one fixed head sail;
Figures 2 show a 12 meter LOA, cruising catamaran; Figure 2.a shows a lateral view of a 12 meter LOA, Figure 2.b shows a top view view of the catamaran of Figure 2.a; Figure 2.c shows a back view of the catamaran of Figure 2.a that shows how a man can cross from one side to the other of the rotating rig through the gap between the jib's clew and the mast, if we have a very low rotating common boom and a base platform;
Figure 3 shows a view from above of a 14 meter LOA non foldable cruising trimaran;
Figures 4 show a 12 meter LOA foldable trimaran; Figure 4.a shows a 12 meter LOA foldable trimaran, showing the interior distribution of the said trimaran and its necessary coincidence of the mast position and the connection of the arms to the main hull, and a man crossing from one side of the rig through a mast "tunnel"; Figure 4.b shows a top view of boat of Figure 4.a showing its floats deployed; Figure 4.c shows the interior of the boat marking the position of the rotating mast and the position of the arms; and
Figure 5 shows a side elevation of a 45 meter schooner with three rotating rigs and two head sails.

### DETAILED DESCRIPTION OF THE DRAWINGS

In order to facilitate its understanding, we will use the following numerical references:
- 1.: Hull
- 2.: Mast
- 3.: Common boom
- 4.: Base platform or circular rail
- 5.: Mast top bearing
- 6.: Base bearing
- 7.: Shrouds and/or stays
- 8.: Head stay
- 9.: Cabin
- 10.: Rotating main
- 11.: Rotating jib
- 12.: Bow sprit
- 13.: Fixed head sail
- 14.: Vertical axis of rotation
- 15.: Emergency sheet
- 16.: Connections boom/platform
- 17.: Tunnel
- 18.: Hinges
- 19.: Booms sweeping circle
- 20.: Arms

### DESCRIPTION OF THE PREFERRED EMBODIMENT

As we have said before, this invention is about a rig for sailing boats. It comprises one or more sails bent to a mast and to a common boom, which, in order to adapt the different wind directions, rotates around a vertical axis (14). The main feature of this invention lies in the fact that the top of the mast (2) is stabilized by several shrouds and/or stays (7) which tie the said top of the mast to the deck or the decks of the boat, being these shrouds and/or stays exterior to the rotating rig, so that the rotating rig can freely rotate even more than 360° if so desired. It also permits that fixed head sails can be bent.

Because of this, the volumes generated by the rig while rotating is devoid of shrouds and/or stays, which could limit or put a stop to each rotation, as happens with traditional sailing boats.

In a more concrete form, as it can be seen in Figure 1, it is shown in perspective a view of a generic cruising trimaran with the rotating rig of this invention comprising a mast (2), a common boom (3), a main sail (10), and a rotating jib (11), stabilized by four shrouds and/or stays (7); this rig is capable of freely rotating for more than 360° around a vertical axes(14) coaxial with mast, is controlled by a rotating platform (4) and guided by a bearing at the top of the mast (5) and the bearing at its base.

In this Figure 1, we can also see: a bow sprit (12) and a fixed head sail (13), bent to the head stay (8) and to the hull (1) of the boat.

### EXAMPLES OF THE USE OF THE INVENTION ON DIVERSE TYPES OF BOATS

This type of rig can be used advantageously on practically any type of sailing vessel, although its size can be limited, as it has to move within the volume contained within shrouds and/or stays. We show below several examples of how this rig can be used by different types of boats, looking especially at the maximum sailing area which can be obtained with our rotating rig and the one which could be obtained with a traditional rig.

To calculate the approximate sailing areas we employ the following symbology:
m: mast height luff
b: common boom
p: foot
the approximate sail area would be:
rotating s. a = (m x b) / 2
fixed s. a. = (m x p) / 2

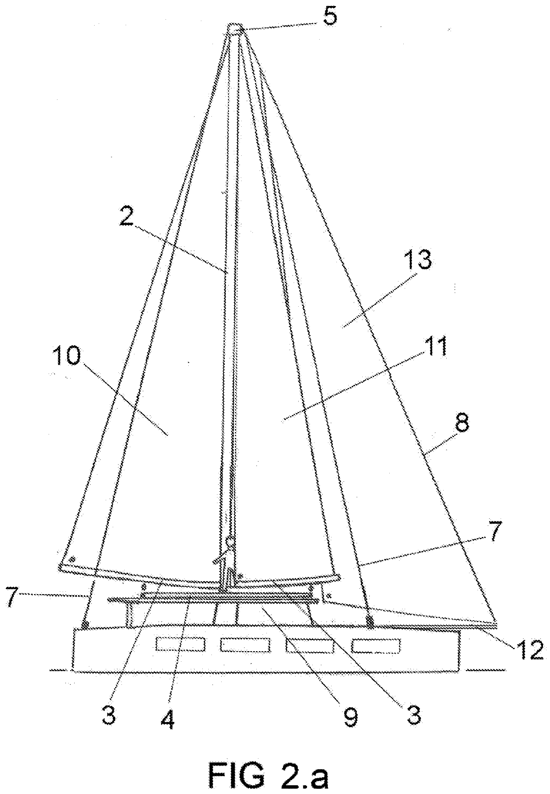

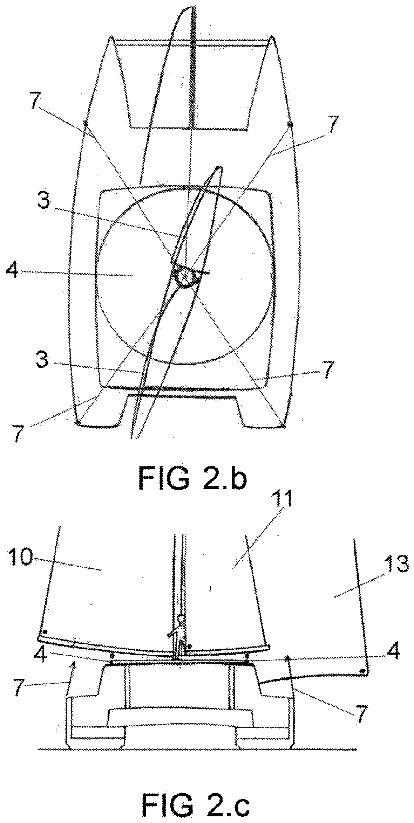

### EXAMPLE - A: A 12 meter LOA cruising catamaran. (Figures 2.a, 2.b, and 2.c)

It has four shrouds and/or stays (7) for the stabilization of the mast. The rotating rig is placed on top of the cabin (9), it has a base platform (4) for its rotation control, and allows the crossing from one to the other on the rig through the slot between the mast and the rotating jib. The rotation of the rig can be more than 360°. There is also a 5.5 m2 fixed head sail (13), bent to the bow sprit (12) and to the hull (1).

It has a 18 meter mast with a 18 meter luff, a 9 meter common boom (3), and a 5.5 m2 fixed head sail. Approximate its maximum sail area would be:
Rotational: (18 x 9) / 2 = 81 m2
Fixed: (18 x 5.5) / 2 = 49.5 m2
Total: 130.5 m2

A similar catamaran such as the Nautitech Open 40 has:
Main: 64 m2
Head sail: 28 m2
Total: 92 m2

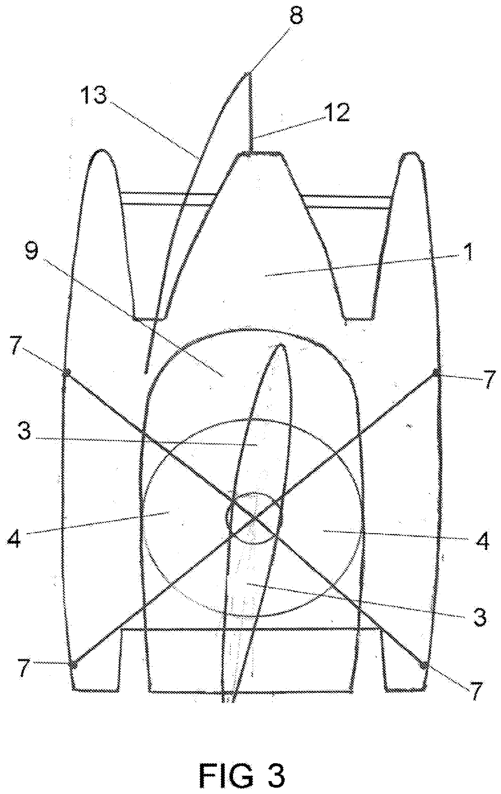

### EXAMPLE - B: A non-foldable 14 meter LOA cruising trimaran. (Figure 3).

It has a 360° rotating rig on top of the cabin (9), stabilized by four shrouds and/or stays (7), a common boom (3), controlled by a 5-meter diameter rotating base platform (4). It also has a fixed head sail (13) bent to a bow sprit (12).

It has a mast with a 19 meter luff, a 9 meter common boom, and a fixed head sail with a 7 meter luff. Approximate its maximum sail area would be:
Rotating: (19 x 9) / 2 = 85.5 m2
Fixed: (19 x 7) / 2 = 66.5 m2
Total: 152 m2

A similar trimaran, the Neel 45, has:
Main: 60 m2
Head sail: 46 m2
Total: 106 m2

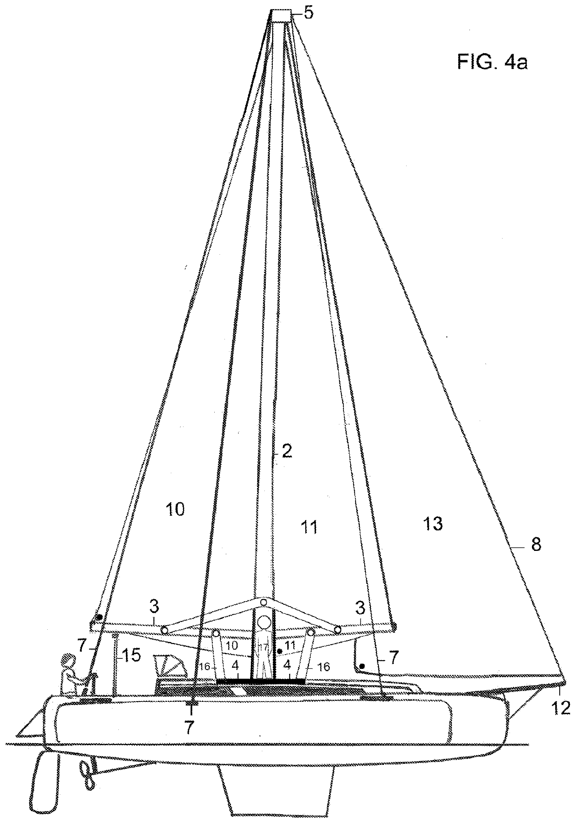

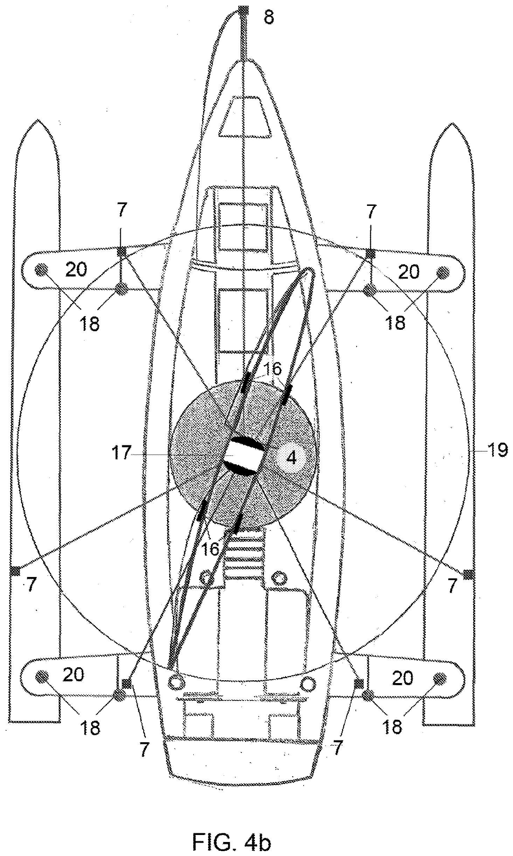

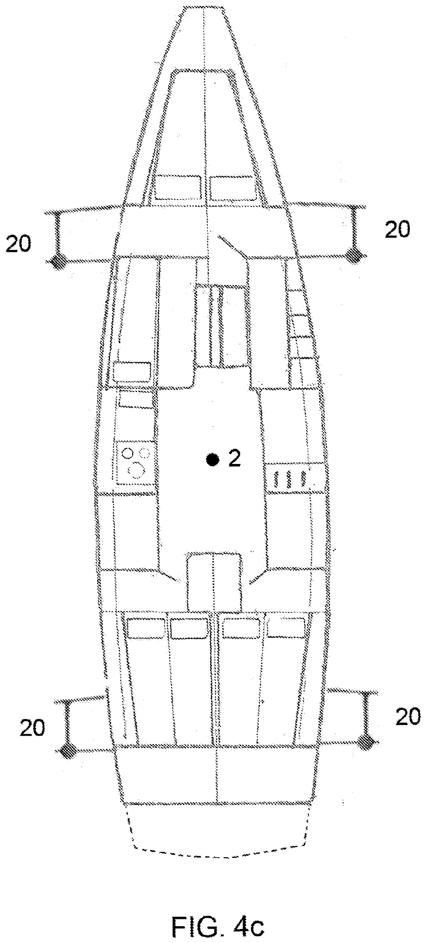

### EXAMPLE - C: A foldable 12 meter LOA cruising trimaran. (Figures 4.a, 4.b, 4.c).

It has a rotating rig controlled by a rotating base platform (4), backed by an emergency sheet (15). Figure 4.a is a side elevation of the boat, Figure 4.b is a view from above of the boat with its floats deployed, and Figure 4.c shows the interior of the boat marking the position of the rotating mast and the position of the arms. The mast is stabilized by six shrouds and/or stays (7), four are fixed and two of them are only used when the floats are deployed.

The mast's luff measures 16 meter, the common boom 7.5 meter, and the fixed head sail luff 5 meter. Approximate its maximum sail area would be:
Rotating: (16 x 7.5) / 2 = 60 m2
Fixed: (16 x 5) / 2 = 40 m2
Total: 100 m2

A similar trimaran, for example, the Dragonfly 1200, has
Main: 60 m2
Head sail: 35 m2
Total: 95 m2

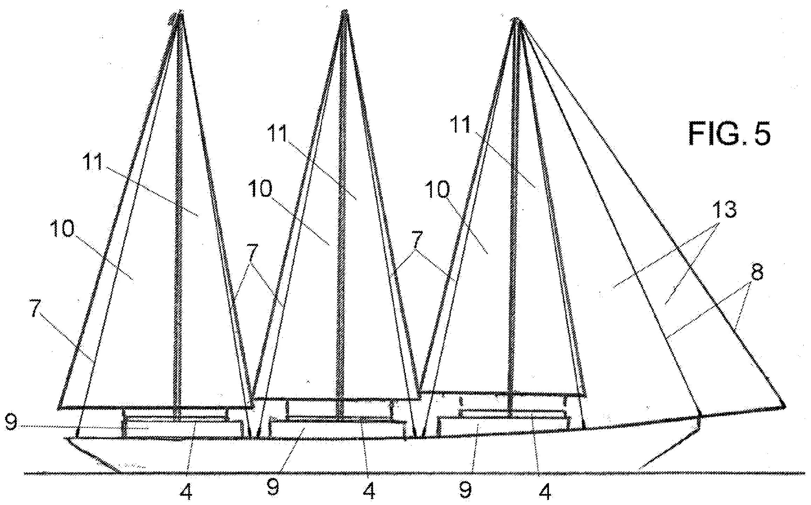

### EXAMPLE - D: A 45 meter LOA schooner. (Figure 5).

It has tree rotating rigs, each one is stabilized by four shrouds and/or stays (7), and has a base platform (4), and a mast (2) with a 27 meter luff, a 10 meter of longitudinal separation between shrouds and/or stays, and three 12 meter common booms. There are also several fixed head sails with a total foot of 12 meters. Approximate its maximum sail area would be:
Rotating: 3 x (12 x 27) / 2 = 486 m2
Fixed: (12 x 27) / 2 = 162 m2
Total: 648 m2

A similar boat, the schooner Malcolm Miller, (or its twin ship Sir Winston Churchill), with 45.16 meters LOA, 8.31 meters beam, would have a total sailing area of 661 m2.

### PRACTICAL CONSIDERATIONS

Some practical considerations should be added:
* The existence of a common boom makes it difficult to cross from one side to the other of the rotating rig, especially if we want the rotating sails near the deck and especially when the common boom lies perpendicular to the boat's plane of symmetry. To solve this problem the following solutions can be employed: the common boom can be elevated, a pass through the slot between the jib and the mast can be used (as in Figure 2.a), or "tunnel" through the mast can be made, (as shown in Figure 4.a).
* The rotating rig halyards should be handled from the rotating rig. The fixed sails halyards should be handled through the fixed mast, or from the deck along with the stays of roller reefing head sails.
* If we want the rotating rig to weather cock like a wind vane, the jib's area should be slightly smaller than the main's area.
* The rotating rigs add a new complication to the equilibrium of forces in sailing boats as reefing takes place, because now not only an equilibrium must be kept between the centre of effort of the sails and the centre of lateral resistance of the hull, as in the traditional rigs, but also an equilibrium must be kept between the areas in front and behind the rotating vertical axis. One way of achieving this equilibrium could be by moving horizontally the foot of the sails. This would be of special importance if only one rotating sail is used.
* A wing mast capable of self-orientation when the boat is not sailing, while the rest of the rig does not move, could be of interest.
* A rotating base platform or a circular rail could be employed to properly control a more than 360° rotation, as a supplement or substitution of the main sail sheet. The use of pairs of motorized rollers, peripherally placed, could be of interest.
* If the mast is supported, for example by four oblique shrouds and/or stays, the bow sprit could be telescopic or even move laterally.
* To reinforce the rotating rigs, lateral and/or lineal reinforcements could be placed between the base platform, the common boom, and the mast. Also, rotating shrouds could be used.
* And finally we want to comment that the self-supported rigs, and by that we mean those where the mast has a deck bearing and a keel bearing, can still be of interest as they permit lighter masts and a greater longitudinal separation of the shrouds and/or stays, or even let them temporarily loose as if they were running backstays.

## Claims

1. A stabilized rotating sailing rig especially devised for the propulsion of boats, comprising a vertical mast, a boom which extends horizontally at both sides of the mast, and at least one sail bent to the mast and to the common boom; rig which rotates with all its elements around a vertical axis; **characterized in that** the rig is being supported by a plurality of shrouds and/or stays which stabilize an upper part of the mast by tying the mast to a periphery of a deck or decks of the boat, in such a way that they are outside of a volume of the rig as it rotates.

2. The stabilized rotating sailing rig according to claim 1, **characterized in that** the necessary connection between the fixed elements of the vessel, (hull or hulls, shrouds and/or stays), and the rotating elements, (common boom, mast, and sails), it is solved by a first bearing connecting the top of the mast to the shrouds and/or stays, and a second bearing connecting a lower part of the mast to the hull or hulls of the vessel.

3. The stabilized rotating sailing rig according to claim 1, **characterized in that** it further includes a mast fixed not only to the hull or hulls but also to the shrouds and/or stays, plus an external rotating mast of tubular shape, coaxial with it, rigid or textile, formed by one or more pieces, which rotates with the common boom and with the sails bent to both of them, including bearings between fixed and rotating elements.

4. The stabilized rotating sailing rig according to previous claims, **characterized in that** a rotation control of the rig rotating elements is executed from the deck or decks of the boat by a base platform or by a circular rail, backed up by an emergency sheet.

5. The stabilized rotating sailing rig according to previous claims, **characterized in that** it further includes additional rotating shrouds, stays, inner stays, which rotate with the rotating mast, the common boom, the rotating sails, and the rotating platform or rail; as additional stability or rigidity devices.

6. The stabilized rotating sailing rig according to previous claims, **characterized in that** a vessel can have one or more rotating rigs, with fixed head sails or even with another type of rig.
